# EUROPEAN PATENT SPECIFICATION

(11) **EP 2 963 960 B1**
(45) Date of publication and mention of the grant of the patent: **10.05.2017**
(21) Application number: 13877247.0
(22) Date of filing: 06.03.2013
(51) Int. Cl.: H04W 16/10, H04W 52/38, H04W 52/50

(54) **CELL PROCESSING METHOD, DEVICE AND CENTRALIZED CONTROLLER**
ZELLVERARBEITUNGSVERFAHREN, VORRICHTUNG UND ZENTRALISIERTES STEUERGERÄT
PROCÉDÉ, DISPOSITIF ET DISPOSITIF DE COMMANDE CENTRALISÉ DE TRAITEMENT DE CELLULE

(43) Date of publication of application: 06.01.2016
(73) Proprietor: Huawei Technologies Co., Ltd., Longgang District Shenzhen, Guangdong 518129 (CN)
(72) Inventor: ZHANG, Daliang, Shenzhen Guangdong 518129 (CN); ZHANG, Liwen, Shenzhen Guangdong 518129 (CN)
(74) Representative: Pfenning, Meinig & Partner mbB
(86) International application number: PCT/CN2013/072244
(87) International publication number: WO 2014/134799

(56) References cited:
- WO-A1-99/27657
- CN-A- 101 494 896
- CN-A- 102 202 310
- US-A1- 2009 318 136
- US-A1- 2012 028 584

## Description

### TECHNICAL FIELD

The present invention relates to communications technologies, and in particular, to a cell processing method and apparatus, and a centralized controller.

### BACKGROUND

Currently, when two different wireless communications standards use a same frequency spectrum, to isolate co-channel interference between the standards, a bufferzone needs to be set, that is, in the bufferzone, both of the two wireless communications standards cannot use a specific segment of frequency spectrum.

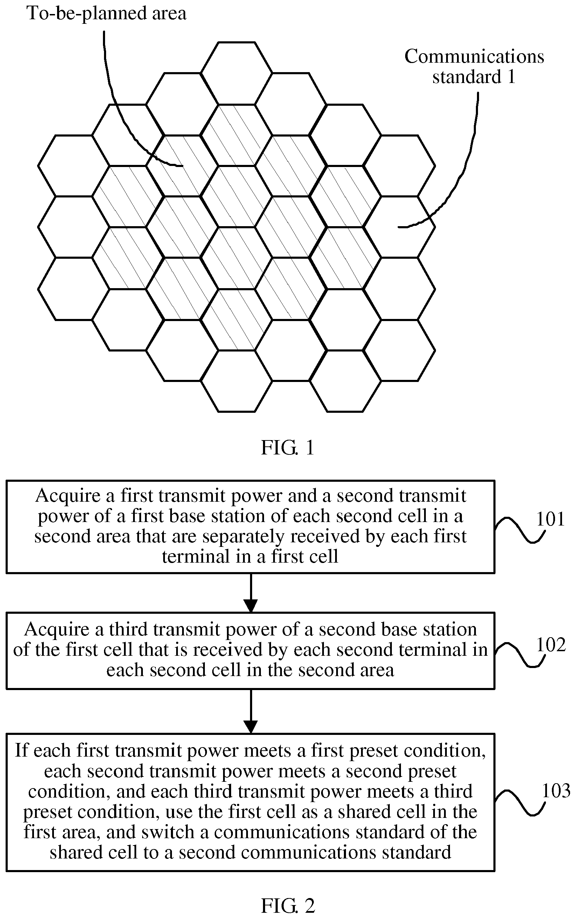

FIG. 1 shows a to-be-planned wireless network area in the prior art. As shown in FIG. 1, in the prior art, a wireless network is divided into a "to-be-planned area" and a "communications standard 1" area according to a traffic status, and each cell in the "to-be-planned area" is planned in advance to use a communications standard 2, where cells in the "communications standard 1" area all use a communications standard 1. Then, after a planning instruction is received, interference between each cell in the "to-be-planned area" and each cell in the "communications standard 1" area is calculated. When interference between a cell in the "to-be-planned area" and each cell in the "communications standard 1" area is less than a threshold, the cell is determined as a cell that uses the communications standard 2. When at least one of interference between a cell in the "to-be-planned area" and each cell in the "communications standard 1" area is greater than or equal to the threshold, the cell is determined as a bufferzone (bufferzone) cell, that is, the bufferzone cell cannot use the communications standard 2 any longer. Finally, a cell in the "to-be-planned area" is re-planned according to the obtained bufferzone cell and the cell that uses the communications standard 2.
US 2009/0318136 A1 discusses a method wherein a first network radio station communicates with a user station with the aid of first radio technology while a second network radio station simultaneously communicates using second radio technology, receives data on radio technologies that can be utilized by the user station, and performs a reconfiguration process allowing the second network radio station to utilize the first radio technology. The second network radio station then communicates with the user station with the aid of the first radio technology.
WO 99/27657 A1 discusses a CDMA communication system that includes a plurality of base stations transmitting at least a corresponding plurality of pilot signals. A mobile station in a coverage area of the system receives at least one of the plurality of pilot signals and transmits a Pilot Strength Measurement Message that includes a Neighbor Set of a list of a plurality of candidate pilots for a hand-off routine. A method and apparatus for determining the Neighbor Set is discussed, including finding a location of the mobile station in the coverage area of system and determining the list of plurality of candidate pilots in the Neighbor Set according to the location of the mobile station.

However, if the traffic volume of the re-planned cell in the "to-be-planned area" changes, an instruction for next re-planning needs to be waited for, and a cell in the "to-be-planned area" in the foregoing manner is adjusted after the re-planning instruction is received. Therefore, a network configuration cannot be adjusted in real time after the traffic volume of the cell in the "to-be-planned area" changes, resulting in low flexibility and low frequency spectrum utilization.

### SUMMARY

The subject-matter of the invention is defined by the claims. Embodiments of the present invention provide a cell processing method and apparatus, and a centralized controller, to resolve a problem in the prior art that a network configuration cannot be adjusted in real time, resulting in low frequency spectrum utilization.

According to a first aspect, an embodiment of the present invention provides a cell processing method, where the method includes:
acquiring a first transmit power and a second transmit power of a first base station of each second cell in a second area that are separately received by each first terminal in a first cell, where the first cell is disposed in a first area, and each first cell in the first area and each second cell in the second area both use a first communications standard;
acquiring a third transmit power of a second base station of the first cell that is received by each second terminal in each second cell in the second area; and
if each first transmit power meets a first preset condition, each second transmit power meets a second preset condition, and each third transmit power meets a third preset condition, using the first cell as a shared cell in the first area, and switching a communications standard of the shared cell to a second communications standard.

The acquiring a first transmit power of a first base station of each second cell in a second area that is separately received by each first terminal in a first cell includes:
acquiring, by using a formula *P*₁ = *P*_{2, m} - *PL*1_{m, n}, a first transmit power *P*₁ of a first base station of an m^{th} second cell in the second area that is separately received by each first terminal in the first cell,
where *P*_{2, m} represents a transmit power of the first base station of the m^{th} second cell in the second area; *PL*1_{m, n} represents a path loss from an n^{th} second terminal in the m^{th} second cell in the second area to the second base station of the first cell; m and n are both positive integers, and greater than or equal to 1; and the first base station, the second base station, the first terminal, and the second terminal all use the first communications standard.

The acquiring a second transmit power of a first base station of each second cell in a second area that is separately received by each first terminal in a first cell includes:
acquiring, by using a formula *P*₂ = *P*_{2, m} - *PL*2_{k, m}, a second transmit power *P*₂ of the first base station of the m^{th} second cell in the second area that is separately received by each first terminal in the first cell,
where *PL*2_{k, m} represents a path loss from a k^{th} third terminal in the first cell to the first base station of the m^{th} second cell in the second area; and k is a positive integer, and greater than or equal to 1,
where the third terminal uses the second communications standard.

The acquiring a third transmit power of a second base station of the first cell that is received by each second terminal in each second cell in the second area includes:
acquiring, by using a formula *P*₃ = *W*1 - *PL*3_{m, p}, the third transmit power *P*₃ of the second base station of the first cell that is separately received by a p^{th} second terminal in an m^{th} second cell in the second area,
where *W*1 represents a transmit power of the second base station of the first cell; *PL*3_{m, *p*} represents a path loss from the p^{th} second terminal in the m^{th} second cell in the second area to the second base station of the first cell; m and p are both positive integers, and greater than or equal to 1; and the first base station, the second base station, the first terminal, and the second terminal all use the first communications standard.

That a first transmit power meets a first preset condition includes that:
when the first transmit power *P*₁ meets *P*₁<*W*2-*W*3+10log(*N*₂ / *N*₁)+threshold1, the first transmit power *P*₁ meets the first preset condition,
where *W*2 represents a transmit power of the first base station of each second cell in the second area; *W*3 represents a transmit power of a k^{th} third terminal in the first cell; *N*₂ represents a bandwidth value of the second communications standard; *N*₁ represents a bandwidth value of the first communications standard; and threshold 1 represents a threshold of interference received by an uplink of the first communications standard from the second communications standard.

That a second transmit power meets a second preset condition includes that:
when the second transmit power *P*₂ meets *P*₂<threshold2, the second transmit power *P*₂ meets the second preset condition,
where threshold2 represents a threshold of interference received by a downlink of the second communications standard from the first communications standard.

That a third transmit power meets a third preset condition includes that: when the third transmit power *P*₃ meets *P*₃<min(*W*1-*W*4 + 10log (*N*₂/*N*₁) + threshold 3, *W*1*-W*5 + threshold4), the third transmit power meets the third preset condition,
where *W*4 represents a transmit power of a k^{th} third base station in the first cell; *N*₂ represents a bandwidth value of the second communications standard; *N*₁ represents a bandwidth value of the first communications standard; threshold 3 represents a threshold of interference received by a downlink of the first communications standard from the second communications standard; *W*5 represents a transmit power of the p^{th} second terminal in the m^{th} cell in the second area; and threshold4 represents a threshold of interference received by an uplink of the second communications standard from the first communications standard.
In a first possible implementation manner of the first aspect, the method further includes: if at least one first transmit power does not meet the first preset condition, at least one second transmit power does not meet the second preset condition, and/or at least one third transmit power does not meet the third preset condition, using the first cell as a bufferzone cell in the first area.

According to a second aspect, an embodiment of the present invention provides a cell processing apparatus, where the apparatus includes:
an acquiring module, configured to acquire a first transmit power and a second transmit power of a first base station of each second cell in a second area that are separately received by each first terminal in a first cell, where the first cell is disposed in a first area, and each first cell in the first area and each second cell in the second area both use a first communications standard, where
the acquiring module is further configured to acquire a third transmit power of a second base station of the first cell that is received by each second terminal in each second cell in the second area;
a determining module, configured to determine whether each first transmit power meets a first preset condition, each second transmit power meets a second preset condition, and each third transmit power meets a third preset condition; and
a shared cell processing module, configured to: if each first transmit power meets the first preset condition, each second transmit power meets the second preset condition, and each third transmit power meets the third preset condition, use the first cell as a shared cell in the first area, and switch a communications standard of the shared cell to a second communications standard.

The acquiring module is specifically configured to acquire, by using a formula *P*₁ = *P*_{2, *m*} - *PL*1_{m, n}, a first transmit power *P*₁ of a first base station of an m^{th} second cell in the second area that is separately received by each first terminal in the first cell,
where *P*_{2, m} represents a transmit power of the first base station of the m^{th} second cell in the second area; *PL*1_{m, n} represents a path loss from an n^{th} second terminal in the m^{th} second cell in the second area to the second base station of the first cell; m and n are both positive integers, and greater than or equal to 1; and the first base station, the second base station, the first terminal, and the second terminal all use the first communications standard.

The acquiring module is further specifically configured to acquire, by using a formula *P*₂ = *P*_{2, m} - *PL*2_{k, m}, a second transmit power *P*₂ of the first base station of the m^{th} second cell in the second area that is separately received by each first terminal in the first cell,
where *PL*2_{k, m} represents a path loss from a k^{th} third terminal in the first cell to the first base station of the m^{th} cell in the second area; and k is a positive integer, and greater than or equal to 1,
where the third terminal uses the second communications standard.

The acquiring module is specifically configured to acquire, by using a formula *P*₃ = W1 - *PL*3_{m, p}, the third transmit power *P*₃ of the second base station of the first cell that is separately received by a p^{th} second terminal in an m^{th} second cell in the second area,
where *W*1 represents a transmit power of the second base station of the first cell; *PL*3_{m, *p*} represents a path loss from the p^{th} second terminal in the m^{th} second cell in the second area to the second base station of the first cell; m and p are both positive integers, and greater than or equal to 1; and the first base station, the second base station, the first terminal, and the second terminal all use the first communications standard.

The determining module is configured to: when the first transmit power *P*₁ meets *P*₁<*W*2-*W*3+10log(*N*₂/*N*₁)+threshold1, determine that the first transmit power *P*₁ meets the first preset condition,
where *W*2 represents a transmit power of the first base station of each second cell in the second area; *W*3 represents a transmit power of a k^{th} third terminal in the first cell; *N*₂ represents a bandwidth value of the second communications standard; *N*₁ represents a bandwidth value of the first communications standard; and threshold 1 represents a threshold of interference received by an uplink of the first communications standard from the second communications standard.

The determining module is further specifically configured to: when the second transmit power *P*₂ meets *P*₂<threshold2, determine that the second transmit power *P*₂ meets the second preset condition,
where threshold2 represents a threshold of interference received by a downlink of the second communications standard from the first communications standard.

The determining module is further specifically configured to: when the third transmit power *P*₃ meets *P*₁<min(*W*1-*W*4+10log(*N*₂/*N*)+threshold 3, *W*1-*W*5+threshold4), determine that the third transmit power *P*₃ meets the third preset condition,
where *W*4 represents a transmit power of a k^{th} third base station in the first cell; *N*₂ represents a bandwidth value of the second communications standard; *N*₁ represents a bandwidth value of the first communications standard; threshold 3 represents a threshold of interference received by a downlink of the first communications standard from the second communications standard; *W*5 represents a transmit power of the p^{th} second terminal in the m^{th} cell in the second area; and threshold4 represents a threshold of interference received by an uplink of the second communications standard from the first communications standard.
In a first possible implementation manner of the second aspect, the apparatus further includes: a bufferzone cell processing module, configured to: if at least one first transmit power does not meet the first preset condition, at least one second transmit power does not meet the second preset condition, and/or at least one third transmit power does not meet the third preset condition, use the first cell as a bufferzone cell in the first area.

According to a third aspect, an embodiment of the present invention provides a centralized controller, where the centralized controller includes: a memory, configured to store an instruction; and
a processor, coupled to the memory, where the processor is configured to execute the instruction stored in the memory, and the processor is configured to execute the cell processing method described above.

With the cell processing method and apparatus, and the centralized controller that are provided in the embodiments of the present invention, whether a first cell is a shared cell is determined, in real time according to an acquired first transmit power and second transmit power of a first base station of each second cell in a second area that are separately received by each first terminal in the first cell and an acquired third transmit power of a second base station of the first cell that is received by each second terminal in each second cell in the second area and according to a first preset condition, a second preset condition, and a third preset condition. If each first transmit power meets the first preset condition, each second transmit power meets the second preset condition, and each third transmit power meets the third preset condition, the first cell is used as a shared cell in the first area, and a communications standard of the shared cell is switched to a second communications standard. A communications standard used by a cell can be dynamically adjusted in real time according to a cell interference status, and therefore in a scenario in which two communications standards are both used, it is implemented that two cells separately using different communications standards use a same frequency spectrum. Therefore, frequency spectrum utilization is effectively improved.

### BRIEF DESCRIPTION OF DRAWINGS

FIG. 1 shows a to-be-planned wireless network area in the prior art;
FIG. 2 is a flowchart of Embodiment 1 of a cell processing method in the present invention;
FIG. 3 is a schematic diagram of a scenario on which a cell processing method is based according to an embodiment of the present invention;
FIG. 4 is a flowchart of Embodiment 3 of a cell processing method in the present invention;
FIG. 5 is a schematic structural diagram of Embodiment 1 of a cell processing method in the present invention; and
FIG. 6 is a schematic structural diagram of Embodiment 2 of a cell processing apparatus in the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

FIG. 2 is a flowchart of Embodiment 1 of a cell processing method in the present invention. The cell processing method provided in this embodiment of the present invention is executed by a cell processing apparatus, where the apparatus is generally implemented in a hardware and/or software manner, and may be integrated in a centralized controller. As shown in FIG. 2, the cell processing method provided in this embodiment of the present invention includes:
Step 101: Acquire a first transmit power and a second transmit power of a first base station of each second cell in a second area that are separately received by each first terminal in a first cell.
   The first cell is disposed in a first area, and each first cell in the first area and each second cell in the second area both use a first communications standard.
Step 102: Acquire a third transmit power of a second base station of the first cell that is received by each second terminal in each second cell in the second area.
Step 103: If each first transmit power meets a first preset condition, each second transmit power meets a second preset condition, and each third transmit power meets a third preset condition, use the first cell as a shared cell in a first area, and switch a communications standard of the shared cell to a second communications standard.

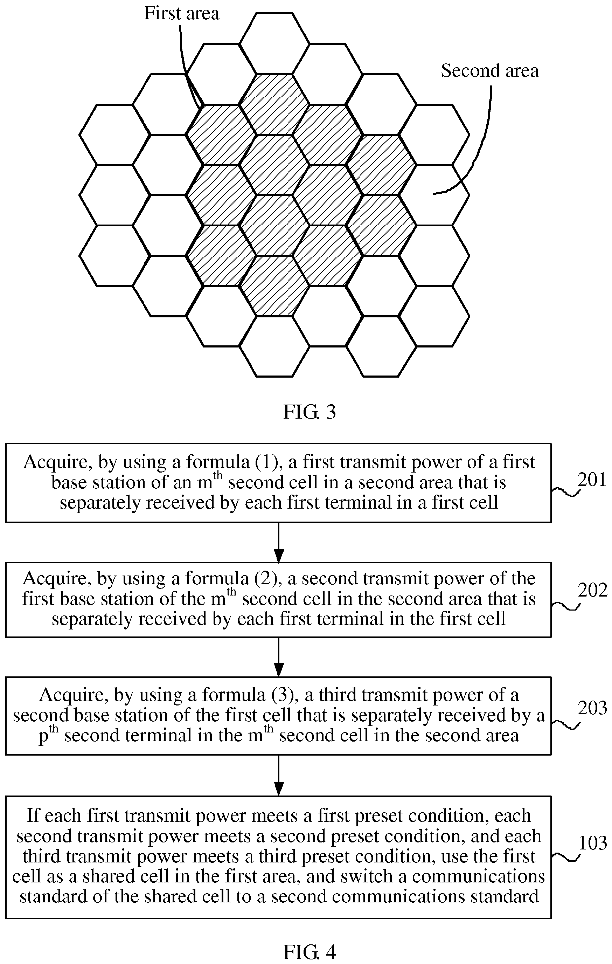

In this embodiment, FIG. 3 is a schematic diagram of a scenario on which the cell processing method is based according to this embodiment of the present invention. As shown in FIG. 3, the scenario includes multiple cells. To enable the scenario to be a scenario in which the two communications standards are both used, the cells in the scenario may be grouped to obtain a to-be-planned area, that is, the first area (which is a dashed area in the figure). The other area in the scenario is the second area (which is a non-dashed area in the figure). A cell in the first area may be referred to as a first cell. A cell in the second area may be referred to as a second cell, where the first cell and the second cell both use the first communications standard. Specifically, the first communications standard may be one of Global System for Mobile Communications (Global System of Mobile communication, GSM for short), Wideband Code Division Multiple Access (Wideband Code Division Multiple Access, WCDMA for short), Code Division Multiple Access (Code Division Multiple Access, CDMA for short), Time Division-Synchronous Code Division Multiple Access (Time Division-Synchronous Code Division Multiple Access, TD-SCDMA for short), Long Term Evolution (Long Term Evolution, LTE), and Worldwide Interoperability for Microwave Access (Worldwide Interoperability for Microwave Access, WiMAX for short). It should be noted that, the cells in the scenario may be grouped according to an actual situation, to obtain the first area and the second area.

In addition, to enable the scenario to be a scenario in which the two communications standards are both used, an interference status of a first cell in the to-be-planned area, that is, the first area further needs to be determined to determine which first cells are shared cells, and which first cells are bufferzone cells. A shared cell may use another communications standard except the first standard, that is, the shared cell may use the second communications standard, where the second communications standard is different from the first communications standard. A bufferzone cell is a space guard band, configured to isolate co-channel interference between a shared cell and a second cell, that is, under both of the second communications standard used by the shared cell and the first communications standard used by the second cell, a frequency spectrum of the bufferzone cell cannot be used for communication. Which first cells are shared cells and which first cells are bufferzone cells can be adjusted in the first area in real time according to a cell interference status. Therefore it is implemented that, in a scenario in which the two communications standards are both used, a shared cell and a second cell that separately use different communications standards can use a same frequency spectrum, effectively improving frequency spectrum utilization.

With the cell processing method provided in this embodiment of the present invention, whether a first cell is a shared cell is determined, in real time according to an acquired first transmit power and second transmit power of a first base station of each second cell in a second area that are separately received by each first terminal in the first cell and an acquired third transmit power of a second base station of the first cell that is received by each second terminal in each second cell in the second area and according to a first preset condition, a second preset condition, and a third preset condition. If each first transmit power meets the first preset condition, each second transmit power meets the second preset condition, and each third transmit power meets the third preset condition, the first cell is used as a shared cell in the first area, and a communications standard of the shared cell is switched to a second communications standard. A communications standard used by a cell can be dynamically adjusted in real time according to a cell interference status, and therefore in a scenario in which two communications standards are both used, it is implemented that two cells separately using different communications standards use a same frequency spectrum. Therefore, frequency spectrum utilization is effectively improved.

In Embodiment 2 of the present invention, on the basis of the foregoing embodiment shown in FIG. 2, the cell processing method in the present invention may further include: if at least one first transmit power does not meet the first preset condition, at least one second transmit power does not meet the second preset condition, and/or at least one third transmit power does not meet the third preset condition, using the first cell as a bufferzone cell in the first area.

FIG. 4 is a flowchart of Embodiment 3 of a cell processing method in the present invention. On the basis of the foregoing Embodiment 2, as shown in FIG. 4, a specific implementation manner of step 101 is:
Step 201: Acquire, by using a formula (1): *P*₁ = *P*_{2, m} - *PL*1_{m, n} (1), a first transmit power *P*₁ of a first base station of an m^{th} second cell in the second area that is separately received by each first terminal in the first cell.
Step 202: Acquire, by using a formula (2): *P*₂ = *P*_{2, m} *- PL*2_{k, m} (2), a second transmit power *P*₂ of the first base station of the m^{th} second cell in the second area that is separately received by each first terminal in the first cell.

*P*_{2, m} represents a transmit power of the first base station of the m^{th} second cell in the second area; *PL*1_{m, n} represents a path loss from an n^{th} second terminal in the m^{th} second cell in the second area to the second base station of the first cell; *PL*2_{k, m} represents a path loss from a k^{th} third terminal in the first cell to the first base station of the m^{th} second cell in the second area; and m, n, and k are all positive integers, and greater than or equal to 1.

More preferably, in step 103, a specific implementation manner in which each first transmit power meets the first preset condition is that:
when each first transmit power *P*₁ meets *P*₁<*W*2-*W*3+10log(*N*₂ / *N*₁)+threshold1, each first transmit power *P*₁ meets the first preset condition.

In this embodiment, when at least one first transmit power *P*₁ does not meet the foregoing first preset condition, it may be determined that the first cell is a bufferzone cell.

More preferably, in step 103, a specific implementation manner in which each second transmit power meets the second preset condition is that:
when each second transmit power *P*₂ meets *P*₂<threshold2, each second transmit power *P*₂ meets the second preset condition.

In this embodiment, when at least one second transmit power *P*₂ does not meet the foregoing second preset condition, it may be determined that the first cell is a bufferzone cell.

*W*2 represents a transmit power of the first base station of each second cell in the second area; *W*3 represents a transmit power of a k^{th} third terminal in the first cell; *N*₂ represents a bandwidth value of the second communications standard; *N*₁ represents a bandwidth value of the first communications standard; threshold 1 represents a threshold of interference received by an uplink of the first communications standard from the second communications standard; and threshold2 represents a threshold of interference received by a downlink of the second communications standard from the first communications standard.

Preferably, *N*₂ may be 5, and *N*₂ may be 0.2.

Further, a specific implementation manner of step 102 is:
Step 203: Acquire, by using a formula (3): *P*₃ = *W*1-*PL*3_{m, p} (3), the third transmit power *P*₃ of the second base station of the first cell that is separately received by a p^{th} second terminal in the m^{th} second cell in the second area.

*W*1 represents a transmit power of the second base station of the first cell; *PL*3_{m,} *p* represents a path loss from the p^{th} second terminal in the m^{th} second cell in the second area to the second base station of the first cell; m and p are both positive integers, and greater than or equal to 1; and the first base station, the second base station, the first terminal, and the second terminal all use the first communications standard.

Preferably, in step 103, a specific implementation manner in which each third transmit power meets the third preset condition is that: when each third transmit power *P*₃ meets *P*₁<*W*1-*W*3+W4+10log(*N*₂ / *N*₁)+threshold 3, *W*1-*W*5+threshold4), each third transmit power *P*₃ meets the third preset condition.

In addition, when at least one third transmit power *P*₃ does not meet the third preset condition, it may be determined that the first cell is a bufferzone cell.

*W*4 represents a transmit power of a k^{th} third base station in the first cell; *N*₂ represents a bandwidth value of the second communications standard; *N*₁ represents a bandwidth value of the first communications standard; threshold 3 represents a threshold of interference received by a downlink of the first communications standard from the second communications standard; *W*5 represents a transmit power of the p^{th} second terminal in the m^{th} cell in the second area; and threshold4 represents a threshold of interference received by an uplink of the second communications standard from the first communications standard.

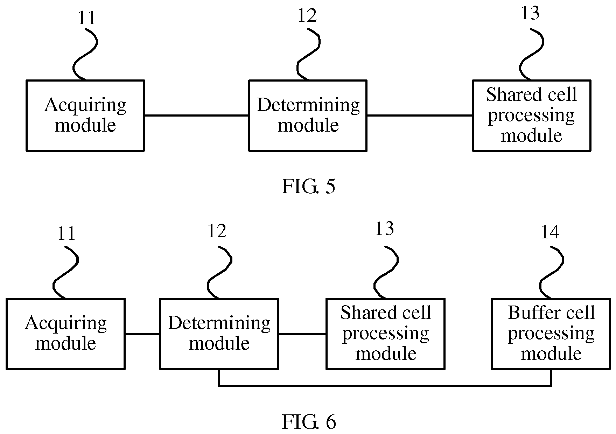

FIG. 5 is a schematic structural diagram of Embodiment 1 of a cell processing apparatus in the present invention. As shown in FIG. 5, the cell processing apparatus provided in this embodiment of the present invention includes: an acquiring module 11, a determining module 12, and a shared cell processing module 13. The acquiring module 11 is configured to acquire a first transmit power and a second transmit power of a first base station of each second cell in a second area that are separately received by each first terminal in a first cell; the acquiring module 11 is further configured to acquire a third transmit power of a second base station of the first cell that is received by each second terminal in each second cell in the second area; the determining module 12 is configured to determine whether each first transmit power meets a first preset condition, each second transmit power meets a second preset condition, and each third transmit power meets a third preset condition; and the shared cell processing module 13 is configured to: if the determining module determines that each first transmit power meets the first preset condition, each second transmit power meets the second preset condition, and each third transmit power meets the third preset condition, use the first cell as a shared cell in the first area, and switch a communications standard of the shared cell to a second communications standard.

The cell processing apparatus in this embodiment may be configured to execute the technical solution of the embodiment of the method shown in FIG. 1. Implementation principles and technical effects thereof are similar, and will not be described in detail herein.

With the cell processing apparatus provided in this embodiment of the present invention, whether a first cell is a shared cell is determined, in real time according to an acquired first transmit power and second transmit power of a first base station of each second cell in a second area that are separately received by each first terminal in the first cell and an acquired third transmit power of a second base station of the first cell that is received by each second terminal in each second cell in the second area and according to a first preset condition, a second preset condition, and a third preset condition. If each first transmit power meets the first preset condition, each second transmit power meets the second preset condition, and each third transmit power meets the third preset condition, the first cell is used as a shared cell in the first area, and a communications standard of the shared cell is switched to a second communications standard. A communications standard used by a cell can be dynamically adjusted in real time according to a cell interference status, and therefore in a scenario in which two communications standards are both used, it is implemented that two cells separately using different communications standards use a same frequency spectrum. Therefore, frequency spectrum utilization is effectively improved.

FIG. 6 is a schematic structural diagram of Embodiment 2 of a cell processing apparatus in the present invention. As shown in FIG. 6, on the basis of the foregoing apparatus Embodiment 1, the apparatus may further include: a bufferzone cell processing module 14, configured to: if the determining module 12 determines that at least one first transmit power does not meet the first preset condition, at least one second transmit power does not meet the second preset condition, and/or at least one third transmit power does not meet the third preset condition, use the first cell as a bufferzone cell in the first area.

Preferably, the acquiring module 11 is specifically configured to acquire, by using a formula *P*₁ = *P*_{2, m} - *PL*1_{m, n}, a first transmit power *P*₁ of a first base station of an m^{th} second cell in the second area that is separately received by each first terminal in the first cell,
where *P*_{2, m} represents a transmit power of the first base station of the m^{th} second cell in the second area; *PL*1_{m, n} represents a path loss from an n^{th} second terminal in the m^{th} second cell in the second area to the second base station of the first cell; m and n are both positive integers, and greater than or equal to 1; and the first base station, the second base station, the first terminal, and the second terminal all use the first communications standard.

More preferably, the acquiring module 11 is further specifically configured to acquire, by using a formula *P*₂ = *P*_{2, m} - *PL*2_{k, m}, a second transmit power *P*₂ of the first base station of the m^{th} second cell in the second area that is separately received by each first terminal in the first cell,
where *PL*2_{k, m} represents a path loss from a k^{th} third terminal in the first cell to the first base station of the m^{th} cell in the second area; and k is a positive integer, and greater than or equal to 1,
where the third terminal uses the second communications standard.

More preferably, the determining module 12 is configured to: when the first transmit power *P*₁ meets *P*₁<*W*2-*W*3+10log(*N*₂ / *N*₁)+threshold1, determine that the first transmit power *P*₁ meets the first preset condition,
where *W*2 represents a transmit power of the first base station of each second cell in the second area; *W*3 represents a transmit power of a kth third terminal in the first cell; *N*₂ represents a bandwidth value of the second communications standard; *N*₁ represents a bandwidth value of the first communications standard; and threshold1 represents a threshold of interference received by an uplink of the first communications standard from the second communications standard.

More preferably, the determining module 12 is further specifically configured to: when the second transmit power *P*₂ meets *P*₂ <threshold2, determine that the second transmit power meets the second preset condition,
where threshold2 represents a threshold of interference received by a downlink of the second communications standard from the first communications standard.

More preferably, the acquiring module 11 is further specifically configured to acquire, by using a formula *P*₃ = W1 - *PL*3_{m, p}, the third transmit power *P*₃ of the second base station of the first cell that is separately received by a p^{th} second terminal in an m^{th} second cell in the second area,
*W*1 represents a transmit power of the second base station of the first cell; *PL*3_{m, *p*} represents a path loss from the p^{th} second terminal in the m^{th} second cell in the second area to the second base station of the first cell; m and p are both positive integers, and greater than or equal to 1; and the first base station, the second base station, the first terminal, and the second terminal all use the first communications standard.

More preferably, the determining module 12 is configured to: when the third transmit power *P*₃ meets P₃<min(*W*1-*W*4+10log(*N*₂ / *N*)+threshold 3, *W*1-*W*5+threshold4), determine that the third transmit power meets the third preset condition,
where *W*4 represents a transmit power of a kth third base station in the first cell; *N*₂ represents a bandwidth value of the second communications standard; *N*₁ represents a bandwidth value of the first communications standard; threshold 3 represents a threshold of interference received by a downlink of the first communications standard from the second communications standard; *W*5 represents a transmit power of the pth second terminal in the mth cell in the second area; and threshold4 represents a threshold of interference received by an uplink of the second communications standard from the first communications standard.

The cell processing apparatus in this embodiment may be configured to execute the technical solution of the embodiment of the method shown in FIG. 2. Implementation principles and technical effects thereof are similar, and will not be described in detail herein.

In another embodiment of the present invention, this embodiment provides a centralized controller, where the centralized controller includes: a memory, configured to store an instruction; and a processor, coupled to the memory, where the processor is configured to execute the instruction stored in the memory, and the processor is configured to execute the cell processing method shown in FIG. 2 or FIG. 4.

A person of ordinary skill in the art may understand that all or some of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A cell processing method, comprising:
acquiring (101) a first and a second transmit power of a first base station of second cell that are separately received by first terminals, wherein each of the first terminals is in a first cell of a second base station, and the each first cell and each second cell both use a first communications standard;
wherein the acquiring a first transmit power of a first base station of second cell comprises:
acquiring (201), by using a formula *P*₁ = *P*_{2, m} - *PL*1_{m, n}, a first transmit power *P*₁ of a first base station of an m^{th} second cell that is separately received by each first terminal in the first cell,
wherein *P*_{2, m} represents a transmit power of the first base station of the m^{th} second cell; *PL*1_{m, n} represents a path loss from an n^{th} second terminal in the m^{th} second cell to the second base station of the first cell; m and n are both positive integers, and greater than or equal to 1; and the first terminal and the second terminal use the first communications standard and
wherein the acquiring a second transmit power of a first base station of second cell comprises:
acquiring (202), by using a formula *P*₂ *= P*_{2, m} - *PL*2_{k, m}, a second transmit power *P*₂ of the first base station of the m^{th} second cell that is separately received by each first terminal in the first cell,
wherein *PL*2_{k, m} represents a path loss from a k^{th} third terminal in the first cell to the first base station of the m^{th} second cell; and k is a positive integer, and greater than or equal to 1,
wherein the third terminal uses a second communications standard;
acquiring (102) a third transmit power of the second base station of the first cell that is received by each of second terminals, each of the second terminals is in the second cell;
wherein the acquiring a third transmit power of the second base station of the first cell from each second terminal comprises:
acquiring(203), by using a formula *P*₃ = *W*1*-PL*3_{m, p}, the third transmit power *P*₃ of the second base station of the first cell that is separately received by a p^{th} second terminal in an m^{th} second cell,
wherein *W*1 represents a transmit power of the second base station of the first cell; *PL*3_{m, *p*} represents a path loss from the p^{th} second terminal in the m^{th} second cell to the second base station of the first cell; m and p are both positive integers, and greater than or equal to 1; and
using (103) the first cell as a shared cell that may use another communications standard, and switching (103) the first communications standard of the shared cell to the second communications standard, if each first transmit power meets a first preset condition, each second transmit power meets a second preset condition, and each third transmit power meets a third preset condition
**characterized in that**
when the first transmit power *P*₁ meets *P*₁<*W*2-*W*3+10log(*N*₂ / *N*₁)+threshold1, the first transmit power *P*₁ meets the first preset condition,
wherein *W*2 represents a transmit power of the first base station of the each second cell; *W*3 represents a transmit power of a k^{th} third terminal in the first cell; *N*₂ represents a bandwidth value of the second communications standard; *N*₁ represents a bandwidth value of the first communications standard; and threshold1 represents a threshold of interference received by an uplink of the first communications standard from the second communications standard; and
when the second transmit power *P*₂ meets *P*₂<threshold2, the second transmit powder *P*₂ meets the second preset condition,
wherein threshold2 represents a threshold of interference received by a downlink of the second communications standard from the first communications standard and
when the third transmit power *P*₃ meets *P*₃<min(*W*1-*W*4+10log(*N*₂ / *N*₁) + threshold 3, *W*1-*W*5+ threshold4), the third transmit power meets the third preset condition,
wherein *W*4 represents a transmit power of a k^{th} third base station in the first cell; *N*₂ represents a bandwidth value of the second communications standard; *N*₁ represents a bandwidth value of the first communications standard; threshold 3 represents a threshold of interference received by a downlink of the first communications standard from the second communications standard; *W*5 represents a transmit power of the p^{th} second terminal in the m^{th} second cell; and threshold4 represents a threshold of interference received by an uplink of the second communications standard from the first communications standard.

2. The cell processing method according to claim 1, further comprising: if at least one first transmit power does not meet the first preset condition, at least one second transmit power does not meet the second preset condition, and/or at least one third transmit power does not meet the third preset condition, using the first cell as a bufferzone cell, wherein a frequency spectrum of the bufferzone cell is not used for communication.

3. A cell processing apparatus, comprising:
an acquiring module (11), configured to acquire a first and a second transmit power of a first base station of second cell that are separately received by first terminals, wherein each of the first terminals is in a first cell of a second base station, and the each first cell and each second cell both use a first communications standard, wherein
the acquiring module (11) is further configured to acquire a third transmit power of the second base station of the first cell from each second terminal, the each second terminal is in the second cell;
wherein the acquiring module (11) is specifically configured to acquire, by using a formula *P*₁ *= P*_{2, m} *- PL*1_{m, n}, a first transmit power *P*₁ of a first base station of an m^{th} second cell that is separately received by each first terminal in the first cell,
wherein *P*_{2, m} represents a transmit power of the first base station of the m^{th} second cell; *PL*1_{m, p} represents a path loss from an k^{th} second terminal in the m^{th} second cell to the second base station of the first cell; m and n are both positive integers, and greater than or equal to 1; and the first terminal and the second terminal all use the first communications standard;
wherein the acquiring module (11) is further specifically configured to acquire, by using a formula *P*₂ = *P*_{2, m} - *PL*2_{k, m}, a second transmit power *P*₂ of the first base station of the m^{th} second cell that is separately received by each first terminal in the first cell,
wherein *PL*2_{k, m} represents a path loss from a k^{th} third terminal in the first cell to the first base station of the m^{th} cell; and k is a positive integer, and greater than or equal to 1,
wherein the third terminal uses a second communications standard;
wherein the acquiring module(11) is further specifically configured to acquire, by using a formula *P₃* = W1 - *PL*3_{m, p}, a third transmit power *P*₃ of the second base station of the first cell that is separately received by a p^{th} second terminal in an m^{th} second cell,
wherein *W*1 represents a transmit power of the second base station of the first cell; *PL*3_{m,} *p* represents a path loss from the p^{th} second terminal in the m^{th} second cell to the second base station of the first cell; m and p are both positive integers, and greater than or equal to 1;
a determining module(12), configured to determine whether each first transmit power meets a first preset condition, each second transmit power meets a second preset condition, and each third transmit power meets a third preset condition; and
a shared cell processing module(13), configured to: if the determining module(12) determines that the each first transmit power meets the first preset condition, the each second transmit power meets the second preset condition, and the each third transmit power meets the third preset condition, use the first cell as a shared cell that may use another communications standard, and switch the first communications standard of the shared cell to the second communications standard;
**characterized in that**
the determining module (12) is specifically configured to: when the first transmit power *P*₁ meets *P*₁<*W*2-*W*3+10log(*N*₂ / *N*₁)+threshold1, determine that the first transmit power *P*₁ meets the first preset condition,
wherein *W*2 represents a transmit power of the first base station of the each second cell; *W*3 represents a transmit power of a k^{th} third terminal in the first cell; *N*₂ represents a bandwidth value of the second communications standard; *N*₁ represents a bandwidth value of the first communications standard; and threshold 1 represents a threshold of interference received by an uplink of the first communications standard from the second communications standard and
the determining module (12) is further specifically configured to: when the second transmit power *P*₂ meets *P*₂<threshold2, determine that the second transmit power *P*₂ meets the second preset condition,
wherein threshold2 represents a threshold of interference received by a downlink of the second communications standard from the first communications standard and
the determining module is further specifically configured to: when the second transmit power *P*₂ meets *P*₂<threshold2, determine that the second transmit power *P*₂ meets the second preset condition,
wherein threshold 2 represents a threshold of interference received by a downlink of the second communications standard from the first communications standard and
the determining module (12) is further specifically configured to: when the third transmit power *P*₃ meets *P*₃<min(*W*1-*W*4+10log(*N*₂ / *N*)+threshold 3, *W*1-*W*5+threshold4, determine that the third transmit power *P*₃ meets the third preset condition,
wherein *W*4 represents a transmit power of a k^{th} third base station in the first cell; *N*₂ represents a bandwidth value of the second communications standard; *N*₁ represents a bandwidth value of the first communications standard; threshold 3 represents a threshold of interference received by a downlink of the first communications standard from the second communications standard; *W*5 represents a transmit power of the p^{th} second terminal in the m^{th} cell in the second area; and threshold4 represents a threshold of interference received by an uplink of the second communications standard from the first communications standard.

4. The apparatus according to claim 3, further comprising:
a bufferzone cell processing module(14), configured to: if the determining module(12) determines that at least one first transmit power does not meet the first preset condition, at least one second transmit power does not meet the second preset condition, and/or at least one third transmit power does not meet the third preset condition, use the first cell as a bufferzone cell, wherein a frequency spectrum of the bufferzone cell is not used for communication.

5. A centralized controller, comprising: a memory, configured to store an instruction; and
a processor, coupled to the memory, wherein the processor is configured to execute the instruction stored in the memory, and the processor is configured to execute the cell processing method according to any one of claims 1 to 2.

## Patentansprüche

1. Zellenverarbeitungsverfahren, das Folgendes umfasst:
Erfassen (101) einer ersten und einer zweiten Sendeleistung einer ersten Basisstation einer zweiten Zelle, die durch erste Endgeräte getrennt empfangen werden, wobei jedes der ersten Endgeräte in einer ersten Zelle einer zweiten Basisstation ist und wobei die jede erste Zelle und die jede zweite Zelle beide einen ersten Kommunikationsstandard verwenden;
wobei das Erfassen einer ersten Sendeleistung einer ersten Basisstation der zweiten Zelle Folgendes umfasst:
Erfassen (201) einer ersten Sendeleistung P₁ einer ersten Basisstation einer m-ten zweiten Zelle, die durch jedes erste Endgerät in der ersten Zelle getrennt empfangen wird, unter Verwendung einer Formel P₁ = P_{2,m} - PL1_{m,n},
wobei P_{2,m} eine Sendeleistung der ersten Basisstation der m-ten zweiten Zelle repräsentiert; PL1_{m,n} einen Wegverlust von einem n-ten zweiten Endgerät in der m-ten zweiten Zelle zu der zweiten Basisstation der ersten Zelle repräsentiert; m und n beide positive ganze Zahlen sind und größer oder gleich 1 sind; und wobei das erste Endgerät und das zweite Endgerät den ersten Kommunikationsstandard verwenden, und
wobei das Erfassen einer zweiten Sendeleistung einer ersten Basisstation der zweiten Zelle Folgendes umfasst:
Erfassen (202) einer zweiten Sendeleistung P₂ der ersten Basisstation der m-ten zweiten Zelle, die durch jedes erste Endgerät in der ersten Zelle getrennt empfangen wird, unter Verwendung einer Formel P₂ = P_{2,m} - PL2_{k,m},
wobei PL2_{k,m} einen Wegverlust von einem k-ten dritten Endgerät in der ersten Zelle zu der ersten Basisstation der m-ten zweiten Zelle repräsentiert; und k eine positive ganze Zahl und größer oder gleich 1 ist,
wobei das dritte Endgerät einen zweiten Kommunikationsstandard verwendet;
Erfassen (102) einer dritten Sendeleistung der zweiten Basisstation der ersten Zelle, die durch jedes der zweiten Endgeräte empfangen wird, wobei jedes der zweiten Endgeräte in der zweiten Zelle ist;
wobei das Erfassen einer dritten Sendeleistung der zweiten Basisstation der ersten Zelle von jedem zweiten Endgerät Folgendes umfasst:
Erfassen (203) der dritten Sendeleistung P₃ der zweiten Basisstation der ersten Zelle, die durch ein p-tes zweites Endgerät in einer m-ten zweiten Zelle getrennt empfangen wird, unter Verwendung einer Formel P₃ = W1 - PL3_{m,p},
wobei W1 eine Sendeleistung der zweiten Basisstation der ersten Zelle repräsentiert; PL3_{m,p} einen Wegverlust von dem p-ten zweiten Endgerät in der m-ten zweiten Zelle zu der zweiten Basisstation der ersten Zelle repräsentiert; m und p beide positive ganze Zahlen sind und größer oder gleich 1 sind; und
Verwenden (103) der ersten Zelle als eine gemeinsam genutzte Zelle, die einen anderen Kommunikationsstandard verwenden kann, und Schalten (103) des ersten Kommunikationsstandards der gemeinsam genutzten Zelle zu dem zweiten Kommunikationsstandard, falls jede erste Sendeleistung eine erste vorgegebene Bedingung erfüllt, jede zweite Sendeleistung eine zweite vorgegebene Bedingung erfüllt und jede dritte Sendeleistung eine dritte vorgegebene Bedingung erfüllt,
**dadurch gekennzeichnet, dass**
die erste Sendeleistung P₁ die erste vorgegebene Bedingung erfüllt, wenn die erste Sendeleistung P₁ P₁ < W2 - W3 + 10 log(N₂/N₁) + threshold1 erfüllt,
wobei W2 eine Sendeleistung der ersten Basisstation der jeden zweiten Zelle repräsentiert; W3 eine Sendeleistung eines k-ten dritten Endgeräts in der ersten Zelle repräsentiert; N₂ einen Bandbreitenwert des zweiten Kommunikationsstandards repräsentiert; N₁ einen Bandbreitenwert des ersten Kommunikationsstandards repräsentiert; und threshold1 einen Schwellenwert der durch eine Aufwärtsstrecke des ersten Kommunikationsstandards von dem zweiten Kommunikationsstandard empfangenen Störung repräsentiert; und
die zweite Sendeleistung P₂ die zweite vorgegebene Bedingung erfüllt, wenn die zweite Sendeleistung P₂ P₂ < threshold2 erfüllt,
wobei threshold2 einen Schwellenwert der durch eine Abwärtsstrecke des zweiten Kommunikationsstandards von dem ersten Kommunikationsstandard empfangenen Störung repräsentiert, und
die dritte Sendeleistung die dritte vorgegebene Bedingung erfüllt, wenn die dritte Sendeleistung P₃ P₃ < min(W1 - W4 + 10 log(N₂/N₁) + threshold3, W1 - W5 + threshold4) erfüllt,
wobei W4 eine Sendeleistung einer k-ten dritten Basisstation in der ersten Zelle repräsentiert; N₂ einen Bandbreitenwert des zweiten Kommunikationsstandards repräsentiert; N₁ einen Bandbreitenwert des ersten Kommunikationsstandards repräsentiert; threshold3 einen Schwellenwert der durch eine Abwärtsstrecke des ersten Kommunikationsstandards von dem zweiten Kommunikationsstandard empfangenen Störung repräsentiert; W5 eine Sendeleistung des p-ten zweiten Endgeräts in der m-ten zweiten Zelle repräsentiert; und threshold4 einen Schwellenwert der durch eine Aufwärtsstrecke des zweiten Kommunikationsstandards von dem ersten Kommunikationsstandard empfangenen Störung repräsentiert.

2. Zellverarbeitungsverfahren nach Anspruch 1, das ferner Folgendes umfasst:
Verwenden der ersten Zelle als eine Pufferzonenzelle, wobei ein Frequenzspektrum der Pufferzonenzelle nicht für die Kommunikation verwendet wird, falls wenigstens eine erste Sendeleistung die erste vorgegebene Bedingung nicht erfüllt, wenigstens eine zweite Sendeleistung die zweite vorgegebene Bedingung nicht erfüllt und/oder wenigstens eine dritte Sendeleistung die dritte vorgegebene Bedingung nicht erfüllt.

3. Zellenverarbeitungsvorrichtung, die Folgendes umfasst:
ein Erfassungsmodul (11), das konfiguriert ist, eine erste und eine zweite Sendeleistung einer ersten Basisstation einer zweiten Zelle, die durch erste Endgeräte getrennt empfangen werden, zu erfassen, wobei jedes der ersten Endgeräte in einer ersten Zelle einer zweiten Basisstation ist und wobei die jede erste Zelle und die jede zweite Zelle beide einen ersten Kommunikationsstandard verwenden, wobei das Erfassungsmodul (11) ferner konfiguriert ist, eine dritte Sendeleistung der zweiten Basisstation der ersten Zelle von jedem zweiten Endgerät zu erfassen, wobei jedes zweite Endgerät in der zweiten Zelle ist;
wobei das Erfassungsmodul (11) spezifisch konfiguriert ist, unter Verwendung einer Formel P₁ = P_{2,m} - PL1_{m,n} eine erste Sendeleistung P₁ einer ersten Basisstation einer m-ten zweiten Zelle, die durch jedes erste Endgerät in der ersten Zelle getrennt empfangen wird, zu erfassen,
wobei P_{2,m} eine Sendeleistung der ersten Basisstation der m-ten zweiten Zelle repräsentiert; PL1_{m,n} einen Wegverlust von einem n-ten zweiten Endgerät in der m-ten zweiten Zelle zu der zweiten Basisstation der ersten Zelle repräsentiert; m und n beide positive ganze Zahlen sind und größer oder gleich 1 sind; und wobei das erste Endgerät und das zweite Endgerät alle den ersten Kommunikationsstandard verwenden;
wobei das Erfassungsmodul (11) ferner spezifisch konfiguriert ist, unter Verwendung einer Formel P₂ = P_{2,m} - PL2_{k,m} eine zweite Sendeleistung P₂ der ersten Basisstation der m-ten zweiten Zelle, die durch jedes erste Endgerät in der ersten Zelle getrennt empfangen wird, zu erfassen,
wobei PL2_{k,m} einen Wegverlust von einem k-ten dritten Endgerät in der ersten Zelle zu der ersten Basisstation der m-ten Zelle repräsentiert; und k eine positive ganze Zahl und größer oder gleich 1 ist,
wobei das dritte Endgerät einen zweiten Kommunikationsstandard verwendet;
wobei das Erfassungsmodul (11) ferner spezifisch konfiguriert ist, unter Verwendung einer Formel P₃ = W1 - PL3_{m,p} eine dritte Sendeleistung P₃ der zweiten Basisstation der ersten Zelle, die durch ein p-tes zweites Endgerät in einer m-ten zweiten Zelle getrennt empfangen wird, zu erfassen,
wobei W1 eine Sendeleistung der zweiten Basisstation der ersten Zelle repräsentiert; PL3_{m,p} einen Wegverlust von dem p-ten zweiten Endgerät in der m-ten zweiten Zelle zu der zweiten Basisstation der ersten Zelle repräsentiert; m und p beide positive ganze Zahlen sind und größer oder gleich 1 sind;
ein Bestimmungsmodul (12), das konfiguriert ist, zu bestimmen, ob jede erste Sendeleistung eine erste vorgegebene Bedingung erfüllt, jede zweite Sendeleistung eine zweite vorgegebene Bedingung erfüllt und jede dritte Sendeleistung eine dritte vorgegebene Bedingung erfüllt; und
ein Modul (13) für die Verarbeitung gemeinsam genutzter Zellen, das konfiguriert ist zum: Verwenden der ersten Zelle als eine gemeinsam genutzte Zelle, die einen anderen Kommunikationsstandard verwenden kann, und Schalten des ersten Kommunikationsstandards der gemeinsam genutzten Zelle zu dem zweiten Kommunikationsstandard, falls das Bestimmungsmodul (12) bestimmt, dass die jede erste Sendeleistung die erste vorgegebene Bedingung erfüllt, dass die jede zweite Sendeleistung die zweite vorgegebene Bedingung erfüllt und dass die jede dritte Sendeleistung die dritte vorgegebene Bedingung erfüllt;
**dadurch gekennzeichnet, dass**
das Bestimmungsmodul (12) spezifisch konfiguriert ist zum: Bestimmen, dass die erste Sendeleistung P₁ die erste vorgegebene Bedingung erfüllt, wenn die erste Sendeleistung P₁ P₁ < W2 - W3 + 10 log(N₂/N₁) + threshold1 erfüllt,
wobei W2 eine Sendeleistung der ersten Basisstation der jeden zweiten Zelle repräsentiert; W3 eine Sendeleistung eines k-ten dritten Endgeräts in der ersten Zelle repräsentiert; N₂ einen Bandbreitenwert des zweiten Kommunikationsstandards repräsentiert; N₁ einen Bandbreitenwert des ersten Kommunikationsstandards repräsentiert; und threshold einen Schwellenwert der durch eine Aufwärtsstrecke des ersten Kommunikationsstandards von dem zweiten Kommunikationsstandard empfangenen Störung repräsentiert und
das Bestimmungsmodul (12) ferner spezifisch konfiguriert ist zum: Bestimmen, dass die zweite Sendeleistung P₂ die zweite vorgegebene Bedingung erfüllt, wenn die zweite Sendeleistung P₂ P₂ < threshold2 erfüllt,
wobei threshold2 einen Schwellenwert der durch eine Abwärtsstrecke des zweiten Kommunikationsstandards von dem ersten Kommunikationsstandard empfangenen Störung repräsentiert und
das Bestimmungsmodul ferner spezifisch konfiguriert ist zum: Bestimmen, dass die zweite Sendeleistung P₂ die zweite vorgegebene Bedingung erfüllt, wenn die zweite Sendeleistung P₂ P₂ < threshold2 erfüllt,
wobei threshold2 einen Schwellenwert der durch eine Abwärtsstrecke des zweiten Kommunikationsstandards von dem ersten Kommunikationsstandard empfangenen Störung repräsentiert und
das Bestimmungsmodul (12) ferner spezifisch konfiguriert ist zum: Bestimmen, dass die dritte Sendeleistung P₃ die dritte vorgegebene Bedingung erfüllt, wenn die dritte Sendeleistung P₃ P₃ < min(W1 - W4 + 10 log(N₂/N) + threshold3, W1 - W5 + threshold4) erfüllt,
wobei W4 eine Sendeleistung einer k-ten dritten Basisstation in der ersten Zelle repräsentiert; N₂ einen Bandbreitenwert des zweiten Kommunikationsstandards repräsentiert; N₁ einen Bandbreitenwert des ersten Kommunikationsstandards repräsentiert; threshold3 einen Schwellenwert der durch eine Abwärtsstrecke des ersten Kommunikationsstandards von dem zweiten Kommunikationsstandard empfangenen Störung repräsentiert; W5 eine Sendeleistung des p-ten zweiten Endgeräts in der m-ten Zelle in dem zweiten Bereich repräsentiert; und threshold4 einen Schwellenwert der durch eine Aufwärtsstrecke des zweiten Kommunikationsstandards von dem ersten Kommunikationsstandard empfangenen Störung repräsentiert.

4. Vorrichtung nach Anspruch 3, die ferner Folgendes umfasst:
ein Pufferzonenzellen-Verarbeitungsmodul (14), das konfiguriert ist zum: Verwenden der ersten Zelle als eine Pufferzonenzelle, wobei ein Frequenzspektrum der Pufferzonenzelle nicht für die Kommunikation verwendet wird, falls das Bestimmungsmodul (12) bestimmt, dass wenigstens eine erste Sendeleistung die erste vorgegebene Bedingung nicht erfüllt, wenigstens eine zweite Sendeleistung die zweite vorgegebene Bedingung nicht erfüllt und/oder wenigstens eine dritte Sendeleistung die dritte vorgegebene Bedingung nicht erfüllt.

5. Zentralisierter Controller, der Folgendes umfasst: einen Speicher, der zum Speichern einer Anweisung konfiguriert ist; und

## Revendications

1. Procédé de traitement de cellules, comprenant :
acquérir (101) une première et une deuxième puissance d'émission d'une première station de base de deuxième cellule qui sont reçues séparément par de premiers terminaux, dans lequel chacun des premiers terminaux se trouve dans une première cellule d'une deuxième station de base, et les chaque première cellule et chaque deuxième cellule utilisent toutes deux une première norme de communication ;
dans lequel l'acquisition d'une première puissance d'émission d'une première station de base de deuxième cellule comprend de :
acquérir (201), en utilisant une formule *P*₁ = *P*_{2, m} - *PL*1_{m, n}, une première puissance d'émission *P*₁ d'une première station de base d'une m-ième deuxième cellule qui est reçue séparément par chaque premier terminal dans la première cellule,
où *P*_{2, m} représente une puissance d'émission de la première station de base de la m-ième deuxième cellule ; *PL*1_{m, n} représente un affaiblissement le long du trajet d'un n-ième deuxième terminal dans la m-ième deuxième cellule à la deuxième station de base de la première cellule ; m et n sont tous deux des nombres entiers positifs, et supérieurs ou égaux à 1 ; et le premier terminal et le deuxième terminal utilisent la première norme de communication, et
dans lequel l'acquisition d'une deuxième puissance d'émission d'une première station de base de deuxième cellule comprend de :
acquérir (202), en utilisant une formule *P*₂ = *P*_{2, m} - *PL*2_{k, m}, une deuxième puissance d'émission *P*₂ de la première station de base de la m-ième deuxième cellule qui est reçue séparément par chaque premier terminal dans la première cellule,
où *PL*2_{k, m} représente un affaiblissement le long du trajet d'un k-ième troisième terminal dans la première cellule à la première station de base de la m-ième deuxième cellule ; et k est un nombre entier positif, et supérieur ou égal à 1,
dans lequel le troisième terminal utilise une seconde norme de communication ;
acquérir (102) une troisième puissance d'émission de la deuxième station de base de la première cellule qui est reçue par chacun des deuxièmes terminaux, chacun des deuxièmes terminaux étant dans la deuxième cellule ;
dans lequel l'acquisition d'une troisième puissance d'émission de la deuxième station de base de la première cellule à partir de chaque deuxième terminal comprend de :
acquérir (203), en utilisant une formule *P*₃ = *W*1*-PL*3_{m, p}, la troisième puissance d'émission *P*₃ de la deuxième station de base de la première cellule qui est reçue séparément par un p-ième deuxième terminal dans une m-ième deuxième cellule,
où *W*1 représente une puissance d'émission de la deuxième station de base de la première cellule ; *PL*3_{m, *p*} représente un affaiblissement le long du trajet du p-ième deuxième terminal dans la m-ième deuxième cellule à la deuxième station de base de la première cellule ; m et p sont tous deux des nombres entiers positifs, et supérieurs ou égaux à 1 ; et
utiliser (103) la première cellule comme cellule partagée qui peut utiliser une autre norme de communication, et
commuter (103) la première norme de communication de la cellule partagée vers la seconde norme de communication, si chaque première puissance d'émission satisfait une première condition prédéfinie, chaque deuxième puissance d'émission satisfait une deuxième condition prédéfinie, et chaque troisième puissance d'émission satisfait une troisième condition prédéfinie,
**caractérisé en ce que**
lorsque la première puissance d'émission *P*₁ satisfait *P*₁<*W*2-*W*3+10log(*N*₂ / *N*₁) + seuil 1, la première puissance d'émission *P*₁ satisfait la première condition prédéfinie,
où *W*2 représente une puissance d'émission de la première station de base de chaque deuxième cellule ; *W*3 représente une puissance d'émission d'un k-ième troisième terminal dans la première cellule ; *N*₂ représente une valeur de bande passante de la seconde norme de communication ; *N*₁ représente une valeur de bande passante de la première norme de communication ; et seuill représente un seuil de brouillage reçu par une liaison montante de la première norme de communication à partir de la seconde norme de communication ; et
lorsque la deuxième puissance d'émission *P*₂ satisfait *P*₂<seuil2 la deuxième puissance d'émission *P*₂ satisfait la deuxième condition prédéfinie,
dans lequel seuil2 représente un seuil de brouillage reçu par une liaison descendante de la seconde norme de communication à partir de la première norme de communication et
lorsque la troisième puissance d'émission *P*₃ satisfait *P*₃<min(*W*1-*W*4+log(*N*₂ / *N*₁) +seuil 3, *W*1-*W*5+seuil 4), la troisième puissance d'émission satisfait la troisième condition prédéfinie,
où *W*4 représente une puissance d'émission d'une k-ième troisième station de base dans la première cellule ; *N*₂ représente une valeur de bande passante de la seconde norme de communication ; *N*₁ représente une valeur de bande passante de la première norme de communication ; seuil 3 représente un seuil de brouillage reçu par une liaison descendante de la première norme de communication à partir de la seconde norme de communication ; *W*5 représente une puissance d'émission du p-ième deuxième terminal dans la m-ième deuxième cellule ; et seuil4 représente un seuil de brouillage reçu par une liaison montante de la seconde norme de communication à partir de la première norme de communication.

2. Procédé de traitement de cellules selon la revendication 1, comprenant en outre : si au moins une première puissance d'émission ne satisfait pas la première condition prédéfinie, au moins une deuxième puissance d'émission ne satisfait pas la deuxième condition prédéfinie et/ou au moins une troisième puissance d'émission ne satisfait pas la troisième condition prédéfinie, utiliser la première cellule comme cellule de zone tampon, dans lequel un spectre de fréquences de la cellule de zone tampon n'est pas utilisé pour la communication.

3. Appareil de traitement de cellules, comprenant :
un module d'acquisition (11), configuré pour acquérir une première et une deuxième puissance d'émission d'une première station de base de deuxième cellule qui sont reçues séparément par de premiers terminaux, dans lequel chacun des premiers terminaux se trouve dans une première cellule d'une deuxième station de base, et les chaque première cellule et chaque deuxième cellule utilisent toutes deux une première norme de communication, dans lequel
le module d'acquisition (11) est en outre configuré pour acquérir une troisième puissance d'émission de la deuxième station de base de la première cellule à partir de chaque deuxième terminal, chaque deuxième terminal étant dans la deuxième cellule ;
dans lequel le module d'acquisition (11) est configuré spécifiquement pour acquérir, en utilisant une formule *P*₁ = *P*_{2, m} - *PL*1_{m, n}, une première puissance d'émission *P*₁ d'une première station de base d'une m-ième deuxième cellule qui est reçue séparément par chaque premier terminal dans la première cellule,
où *P*_{2, m} représente une puissance d'émission de la première station de base de la m-ième deuxième cellule ; *PL*1_{m, n} représente un affaiblissement le long du trajet d'un n-ième deuxième terminal dans la m-ième deuxième cellule à la deuxième station de base de la première cellule ; m et n sont tous deux des nombres entiers positifs, et supérieurs ou égaux à 1 ; et le premier terminal et le deuxième terminal utilisent la première norme de communication,
dans lequel le module d'acquisition (11) est en outre spécifiquement configuré pour acquérir, en utilisant une formule *P*₂ = *P*_{2, m} - *PL*2_{k, m}, une deuxième puissance d'émission *P*₂ de la première station de base de la m-ième deuxième cellule qui est reçue séparément par chaque premier terminal dans la première cellule,
où *PL*2_{k, m} représente un affaiblissement le long du trajet d'un k-ième troisième terminal dans la première cellule à la première station de base de la m-ième cellule ; et k est un nombre entier positif, et supérieur ou égal à 1,
dans lequel le troisième terminal utilise une seconde norme de communication ;
dans lequel le module d'acquisition (11) est en outre spécifiquement configuré pour acquérir, en utilisant une formule *P*₃ = W1 *- PL*3_{m, p}, une troisième puissance d'émission *P*₃ de la deuxième station de base de la première cellule qui est reçue séparément par un p-ième deuxième terminal dans une m-ième deuxième cellule,
où *W*1 représente une puissance d'émission de la deuxième station de base de la première cellule ; *PL*3_{m, *p*} représente un affaiblissement le long du trajet du p-ième deuxième terminal dans la m-ième deuxième cellule à la deuxième station de base de la première cellule ; m et p sont tous deux des nombres entiers positifs, et supérieurs ou égaux à 1 ;
un module de détermination (12), configuré pour déterminer si chaque première puissance d'émission satisfait une première condition prédéfinie, chaque deuxième puissance d'émission satisfait une deuxième condition prédéfinie, et chaque troisième puissance d'émission satisfait une troisième condition prédéfinie ; et
un module de traitement de cellule partagée (13), configuré pour : si le module de détermination (12) détermine que la chaque première puissance d'émission satisfait la première condition prédéfinie, la chaque deuxième puissance d'émission satisfait la deuxième condition prédéfinie, et la chaque troisième puissance d'émission satisfait la troisième condition prédéfinie, utiliser la première cellule comme cellule partagée qui peut utiliser une autre norme de communication, et commuter la première norme de communication de la cellule partagée vers la seconde norme de communication ;
**caractérisé en ce que**
le module de détermination (12) est configuré spécifiquement pour : lorsque la première puissance d'émission *P*₁ satisfait *P*₁<*W*2*-W*3+10log(*N*₂ / *N*₁) + seuil1, déterminer que la première puissance d'émission *P*₁ satisfait la première condition prédéfinie,
où *W*2 représente une puissance d'émission de la première station de base de chaque deuxième cellule ; *W*3 représente une puissance d'émission d'un k-ième troisième terminal dans la première cellule ; *N*₂ représente une valeur de bande passante de la seconde norme de communication ; *N*₁ représente une valeur de bande passante de la première norme de communication ; et seuil1 représente un seuil de brouillage reçu par une liaison montante de la première norme de communication à partir de la seconde norme de communication ; et
le module de détermination (12) est en outre configuré spécifiquement pour : lorsque la deuxième puissance d'émission *P*₂ satisfait *P*₂ <seuil2, déterminer que la deuxième puissance d'émission *P*₂ satisfait la deuxième condition prédéfinie,
dans lequel seuil2 représente un seuil de brouillage reçu par une liaison descendante de la seconde norme de communication à partir de la première norme de communication et
le module de détermination est en outre configuré spécifiquement pour : lorsque la deuxième puissance d'émission *P*₂ satisfait *P*₂ <seuil2, déterminer que la deuxième puissance d'émission *P*₂ satisfait la deuxième condition prédéfinie, dans lequel seuil2 représente un seuil de brouillage reçu par une liaison descendante de la seconde norme de communication à partir de la première norme de communication et
le module de détermination (12) est en outre configuré spécifiquement pour : lorsque la troisième puissance d'émission *P*₃ satisfait *P*₃<min(*W*1*-W*4 + 10log(*N*₂ / *N*₁)+threshold1 + seuil 3, *W*₁-*W*₅ + seuil4), déterminer que la troisième puissance d'émission *P*₃ satisfait la troisième condition prédéfinie,
où *W*4 représente une puissance d'émission d'une k-ième troisième station de base dans la première cellule ; *N*₂ représente une valeur de bande passante de la seconde norme de communication ; *N*₁ représente une valeur de bande passante de la première norme de communication ; seuil 3 représente un seuil de brouillage reçu par une liaison descendante de la première norme de communication à partir de la seconde norme de communication ; *W*5 représente une puissance d'émission du p-ième deuxième terminal dans la m-ième cellule dans la seconde zone ; et seuil4 représente un seuil de brouillage reçu par une liaison montante de la seconde norme de communication à partir de la première norme de communication.

4. Appareil selon la revendication 3, comprenant en outre :
un module de traitement de cellules de zone tampon (14), configuré pour : si le module de détermination (12) détermine qu'au moins une première puissance d'émission ne satisfait pas la première condition prédéfinie, au moins une deuxième puissance d'émission ne satisfait pas la deuxième condition prédéfinie et/ou au moins une troisième puissance d'émission ne satisfait pas la troisième condition prédéfinie, utiliser la première cellule comme cellule de zone tampon, dans lequel un spectre de fréquences de la cellule de zone tampon n'est pas utilisé pour la communication.

5. Contrôleur centralisé, comprenant : une mémoire, configurée pour stocker une instruction ; et un processeur, couplé à la mémoire, dans lequel le processeur est configuré pour exécuter l'instruction stockée dans la mémoire et le processeur est configuré pour exécuter le Procédé de traitement de cellules selon l'une quelconque des revendications 1 à 2.
